# FASCICULE DE BREVET EUROPEEN

(11) **EP 2 238 718 B1**
(45) Date de publication et mention de la délivrance du brevet: **22.03.2017**
(21) Numéro de dépôt: 08861324.5
(22) Date de dépôt: 02.12.2008
(51) Int. Cl.: H04L 12/701

(54) **TECHNIQUE POUR PROTÉGER UN CHEMIN À COMMUTATIONS D'ÉTIQUETTES EN MODE CONNECTÉ LORS D'UNE PANNE AFFECTANT UN NOEUD DONNÉ DU CHEMIN**
TECHNIK ZUM SCHUTZ EINES PFADS MIT UMSCHALTUNGEN VON TAGS IM VERBUNDENEN MODUS WÄHREND EINES EINEN GEGEBENEN KNOTEN DES PFADES BEEINTRÄCHTIGENDEN FEHLERS
TECHNIQUE FOR PROTECTING A LABEL SWITCHING PATH IN CONNECTED MODE DURING A FAULT AFFECTING A GIVEN NODE OF THE PATH

(30) Priorité: 03.12.2007 FR 0759528
(43) Date de publication de la demande: 13.10.2010
(73) Titulaire: Orange, 75015 Paris (FR)
(72) Inventeur: CHAITOU, Mohamad, F-75018 Paris (FR); LE ROUX, Jean-Louis, F-22300 Lannion (FR)
(86) Numéro de dépôt international: PCT/FR2008/052186
(87) Numéro de publication internationale: WO 2009/077704

(56) Documents cités:
- LE ROUX (ED) FRANCE TELECOM R AGGARWAL JUNIPER NETWORKS J P VASSEUR CISCO SYSTEMS J L ET AL: "P2MP MPLS-TE Fast Reroute with P2MP Bypass Tunnels; draft-ietf-mpls-p2mp-te-bypass-01.txt" IETF STANDARD-WORKING-DRAFT, INTERNET ENGINEERING TASK FORCE, IETF, CH, vol. mpls, no. 1, 1 juillet 2007 (2007-07-01), XP015051471 ISSN: 0000-0004
- MINEI (EDITOR) K KOMPELLA JUNIPER NETWORKS I WIJNANDS (EDITOR) B THOMAS CISCO SYSTEMS I ET AL: "Label Distribution Protocol Extensions for Point-to-Multipoint and Multipoint-to-Multipoint Label Switched Paths; draft-ietf-mpls-ldp-p2mp-03.txt" IETF STANDARD-WORKING-DRAFT, INTERNET ENGINEERING TASK FORCE, IETF, CH, vol. mpls, no. 3, 9 juillet 2007 (2007-07-09), XP015051466 ISSN: 0000-0004

## Description

L'invention concerne une technique pour protéger un chemin à commutations d'étiquettes en mode connecté lors d'une panne affectant un lien ou un noeud donné du chemin dans un réseau de communication par commutation d'étiquettes et pour acheminer les paquets lors de la panne.

Un réseau de communication par commutation d'étiquettes multi-protocole ou réseau IP/MPLS, pour "Multi-Protocol Label Switching" est constitué d'un ensemble de routeurs, dont certains sont des routeurs de coeur, c'est-à-dire des routeurs dédiés à l'acheminement des paquets, et d'autres des routeurs d'accès, c'est-à-dire des routeurs assurant l'interconnexion entre le réseau de communication IP et le réseau MPLS. L'ensemble des routeurs d'accès du réseau sont raccordés entre eux par des tunnels MPLS. Ils permettent d'établir une connectivité de bout en bout entre deux équipements terminaux qui leur sont raccordés. Il existe deux modes pour l'établissement de tunnels MPLS, un premier mode dit, mode non connecté reposant sur le protocole LDP, et un deuxième mode, dit mode connecté, reposant sur le protocole RSVP-TE, pour "Resource ReserVation Protocol-Traffic Engineering", tel que spécifié dans le document RFC 3209 par l'IETF, pour "Internet Engineering Task Force". Ce deuxième mode est encore appelé mode MPLS-TE et permet de mettre en oeuvre des fonctions d'ingénierie de trafic avancées comme l'optimisation fine de la bande passante, le contrôle d'admission, et le re-routage rapide en cas de panne. Lors de l'établissement d'un tunnel de type MPLS-TE, les ressources, telles que la bande passante, sont explicitement réservées sur l'ensemble des liens empruntés dans le réseau sous-jacent. Le mécanisme MPLS-TE (MPLS Traffic Engineering) permet l'établissement de chemins à commutation d'étiquettes ou LSP pour « Label Switched Path » MPLS, routés de façon explicite en fonction de contraintes de trafic et des ressources disponibles dans le réseau. Ces LSP MPLS sont appelés TE-LSP ou encore «tunnels MPLS-TE». Le mécanisme MPLS-TE est utilisé pour le transport d'applications à fortes contraintes de bande passante, de qualité de service et de disponibilité, telles que des applications de voix, de vidéo, ou de télévision. Dans ce deuxième mode d'établissement de tunnels MPS, ceux-ci sont établis de façon automatique par le protocole de signalisation RSVP-TE. Ces tunnels MPLS-TE peuvent être assimilés à des connexions. Le mécanisme MPLS-TE permet ainsi d'obtenir un mode connecté dans les réseaux de type IP, permettant d'optimiser l'utilisation des ressources et de maximiser la charge de trafic pouvant circuler sur le réseau tout en préservant la qualité de service. Ainsi, un réseau de communication MPLS, supportant le protocole RSVP-TE, est un réseau de transport de paquets en mode connecté. Le protocole RSVP-TE, dans son extension définie dans le document RFC 4875, permet en outre d'établir des tunnels MPLS-TE point-à-multipoint, appelé P2MP, entre un routeur source, encore appelé routeur "racine", et une pluralité de routeurs de destination, encore appelés routeurs d'extrémité, pour le transport de trafic entre le routeur racine et la pluralité de routeurs d'extrémité.

Dans un tel réseau, on prévoit généralement des mécanismes de protection, en particulier en cas de panne de l'un des noeuds affectant un chemin TE-LSP. Par exemple, le document "draft-ietf-mpls-p2mp-te-bypass-01.txt" de l'IETF enseigne un tel mécanisme de protection d'un chemin point à multipoints par un chemin de secours point à multipoints.

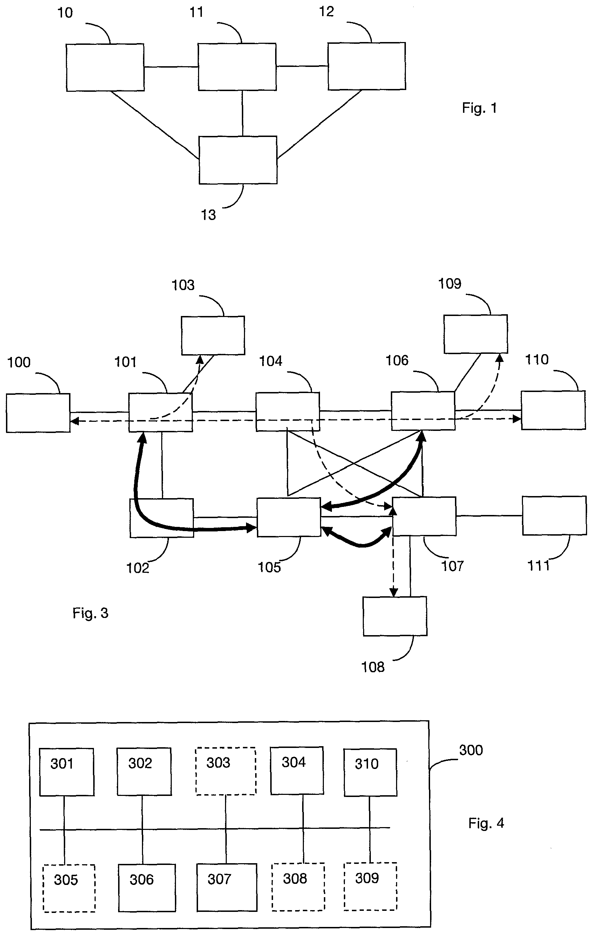

Par la suite, une panne affectant un noeud couvre aussi bien les cas de panne du noeud en lui-même que les pannes des liens issus de ce noeud. A cet effet, on met généralement en place une protection entre un noeud situé en amont du noeud à protéger et un ou plusieurs noeuds situés en aval du noeud à protéger. A titre d'exemple, sur la figure 1, on a représenté une partie d'un réseau de communication comprenant quatre noeuds 10-13. Un premier chemin à commutation d'étiquettes TE LSP1 P2P est établi entre les noeuds 10-11-12. Pour ce premier chemin, on veut protéger le noeud 11. A cet effet, on utilise un chemin TE-LSP P2P à commutation d'étiquettes de secours reliant les noeuds 10 et 12, par l'intermédiaire du noeud 13. Tous les chemins à commutation d'étiquettes empruntant la partie du LSP1 située entre le noeud 10 et le noeud 12 peuvent emprunter le chemin TE-LSP P2P à commutation d'étiquettes de secours en utilisant le mécanisme d'encapsulation MPLS. Toutefois, pour un autre chemin à commutation d'étiquettes LSP2, reliant le noeud 10 au noeud 11 puis au noeud 13, il est nécessaire d'établir un autre chemin à commutation d'étiquettes de secours entre les noeuds 10 et 13. Lors de la panne affectant le noeud 11, on achemine les paquets selon des chemins à commutation d'étiquettes de secours différents suivant si leur acheminement initial est le LSP1 ou le LSP2. Il est nécessaire d'établir une pluralité de TE-LSP, ce qui implique une consommation de ressources de commande importante aussi bien de ressources CPU que de mémoire au niveau des noeuds du réseau.

Il existe donc un besoin d'une technique permettant de protéger des chemins à commutation d'étiquettes comprenant des parties communes lors d'une panne affectant l'un des noeuds d'acheminement en commun.

L'invention répond à ce besoin en proposant un procédé d'initiation d'une protection d'un chemin à commutation d'étiquettes primaire en mode connecté lors d'une panne affectant un noeud donné dudit chemin dans un réseau de communication par commutation d'étiquettes, par un chemin à commutation d'étiquettes de secours multipoint à multipoint en mode connecté, établi entre des noeuds voisins dudit noeud donné, le chemin primaire ayant été établi de noeuds en amont du noeud donné vers un ou des noeuds aval,
le procédé étant mis en oeuvre par un noeud voisin appartenant auxdits chemins primaire et de secours et situé en amont du noeud donné dans le chemin primaire, dit noeud protecteur initiateur et comprenant les étapes suivantes :
- une étape de sélection parmi la pluralité des noeuds voisins du noeud donné d'un ou de noeuds situés en aval du noeud donné dans le chemin primaire, dits noeuds protecteurs, lesdits noeuds protecteurs et le noeud protecteur initiateur étant identifiés de façon unique ;
- une étape d'affectation d'une étiquette de secours, associée au chemin primaire, à associer par les noeuds protecteurs à des paquets destinés à être acheminés par une des branches du chemin primaire reliant le noeud donné à un des noeuds protecteurs et acheminés par le chemin de secours lors de la panne,
- une étape d'envoi à un des noeuds protecteurs sélectionnés d'une demande de protection, ladite demande de protection indiquant le chemin primaire, le chemin de secours, l'identifiant dudit noeud protecteur initiateur à associer par les noeuds protecteurs en tant qu'étiquette de contexte auxdits paquets, et l'étiquette de secours, ladite étape d'envoi étant réitérée pour l'ensemble des noeuds protecteurs sélectionnés,
- une étape de mémorisation, dans une table d'acheminement, de sorties nominales visant à encapsuler les paquets acheminés, en régime normal, par une des branches du chemin primaire reliant le noeud donné à un des noeuds protecteurs et, de sorties de secours associant une étiquette d'une branche du chemin primaire à l'étiquette de contexte et l'étiquette de secours et à l'identifiant du prochain noeud sur le chemin de secours, ceci pour chaque branche du chemin de secours,
- une étape de détection d'un événement,
- si l'événement est une panne affectant le noeud donné, une étape d'activation des sorties de secours mémorisées, et de désactivation des sorties nominales mémorisées,
- si l'événement est une disparition d'une panne affectant le noeud donné, une étape de désactivation des sorties de secours mémorisées et d'activation des sorties nominales mémorisées.

On se place ici dans le cas d'un établissement de protection pour un noeud donné, appelé par la suite noeud à protéger. Ce noeud est entouré dans l'architecture du réseau de communication sous-jacent d'un ensemble de noeuds voisins. Un chemin à commutation d'étiquettes de secours multipoint à multipoint en mode connecté est établi afin de permettre à l'ensemble de ses noeuds voisins de communiquer entre eux. Afin de protéger un chemin à commutation d'étiquettes primaire, le noeud protecteur initiateur de la demande de protection sélectionne dans l'ensemble des noeuds voisins du noeud à protéger ceux qui appartiennent au chemin primaire. Il leur transmet une demande de protection du chemin primaire par le chemin de secours, comprenant un identifiant permettant de l'identifier de façon unique, cet identifiant étant à associer par les noeuds protecteurs en tant qu'étiquette aux paquets lors de la panne. Les paquets normalement acheminés en l'absence de panne par l'intermédiaire d'une des branches du chemin primaire issues du noeud à protéger sont encapsulés dans le chemin de secours, l'identifiant du noeud protecteur initiateur leur étant associé en tant qu'étiquette de contexte. Le chemin de secours étant bidirectionnel, cette étiquette de contexte est utilisée dans les deux sens de communication, aussi bien pour émettre des paquets étiquetés que pour traiter des paquets étiquetés reçus sur le chemin de secours. Ainsi il est possible pour un noeud d'extrémité du chemin de secours de déterminer, à partir des informations contenues dans les paquets reçus sur le chemin de secours, s'il doit les traiter de façon particulière. Cet identifiant utilisé comme étiquette étant unique, il est alors possible de mutualiser un chemin de secours afin de protéger différents chemins primaires, qu'ils soient point à point, point à multipoint ou multipoint à multipoint. En effet, dans un procédé où une étiquette est allouée localement par un noeud initiateur de la protection, il existe un risque qu'une même étiquette soit allouée par deux noeuds distincts. Grâce à l'invention, n'importe quel noeud défini comme noeud d'extrémité du chemin de secours peut initier la demande de protection. L'identifiant du noeud protecteur initiateur de la demande de protection associé aux paquets en tant qu'étiquette permet ainsi de distinguer l'appartenance des paquets aux différents chemins primaires protégés. Le même identifiant du noeud protecteur initiateur étant utilisé en tant qu'étiquette par l'ensemble des noeuds protecteurs, il n'y a pas de duplication de paquets dans le réseau. Les ressources du réseau sont par ailleurs économisées, un seul tunnel multipoint à multipoint de secours étant établi pour protéger un ou plusieurs chemins primaires.

De plus, la protection obtenue lors d'une panne est compatible avec les exigences de qualité de service requises pour des applications à fortes contraintes de bande passante, de qualité de service et de disponibilité avec un temps d'interruption inférieur à cinquante millisecondes.

Le procédé d'initiation d'une protection comprend en outre une étape de réception d'une demande d'établissement du chemin de secours, ladite demande indiquant qu'une pluralité de noeuds peut utiliser ledit chemin de secours pour protéger un chemin primaire lors de pannes affectant ledit noeud donné.

Les noeuds d'extrémité du chemin de secours sont informés lors de l'établissement du chemin de secours de la possibilité qui leur est offerte de l'utiliser pour protéger un chemin primaire lors d'une panne affectant un noeud donné. Ainsi n'importe quel noeud d'extrémité du chemin de secours peut initier l'établissement de la protection.

Dans un mode de réalisation, le procédé d'initiation d'une protection comprend une étape d'affectation d'une étiquette de secours, associée au chemin primaire, à associer par les noeuds protecteurs auxdits paquets en complément de l'identifiant dudit noeud protecteur initiateur, et dans lequel ladite demande de protection comprend en outre l'étiquette de secours affectée.

Le noeud protecteur initiateur de la protection affecte en outre une étiquette de secours à associer par les noeuds protecteurs aux paquets en complément de l'identifiant lors de la panne. Les paquets normalement acheminés en l'absence de panne par l'intermédiaire d'une des branches du chemin primaire issues du noeud à protéger sont encapsulés dans le chemin de secours, les deux étiquettes, l'identifiant du noeud protecteur initiateur et l'étiquette de secours, leur étant associés. Ainsi, un noeud protecteur recevant par l'intermédiaire du chemin de secours un tel paquet peut en déduire quel est le chemin primaire utilisé en l'absence de panne. La même étiquette de secours étant affectée par le noeud protecteur initiateur de la demande de protection et utilisée par l'ensemble des noeuds protecteurs, il n'y a pas de duplication de paquets dans le réseau. L'utilisation de cette étiquette permet au noeud protecteur initiateur de protéger plusieurs chemins primaires en utilisant ce chemin multipoint à multipoint de secours.

L'invention concerne également un procédé de protection d'un chemin à commutations d'étiquettes primaire en mode connecté lors d'une panne affectant un noeud donné dudit chemin dans un réseau de communication par commutation d'étiquettes, par un chemin à commutation d'étiquettes de secours multipoint à multipoint en mode connecté, établi entre des noeuds voisins dudit noeud donné, le chemin primaire ayant été établi de noeuds en amont du noeud donné vers un ou des noeuds en aval,
le procédé étant mis en oeuvre par un noeud situé en aval du noeud donné dans le chemin primaire et comprenant les étapes suivantes :
- une étape de réception d'une demande de protection en provenance d'un noeud protecteur initiateur, ladite demande de protection indiquant le chemin primaire, le chemin de secours et un identifiant dudit noeud protecteur initiateur à associer par les noeuds protecteurs en tant qu'étiquette aux paquets destinés à être acheminés par une des branches du chemin primaire reliant le noeud donné à un des noeuds protecteurs et acheminés par le chemin de secours lors de la panne.

Dans un mode de réalisation, la demande de protection comprend en outre une étiquette de secours, associée au chemin primaire, à associer par les noeuds protecteurs auxdits paquets en complément de l'identifiant dudit noeud protecteur initiateur.

L'invention concerne également un procédé d'acheminement de paquets lors d'une panne affectant un noeud donné d'un chemin à commutation d'étiquettes primaire en mode connecté dans un réseau de communication par commutation d'étiquettes, dans lequel ledit chemin primaire est protégé par un chemin à commutation d'étiquettes de secours multipoint à multipoint en mode connecté, le chemin de secours étant adapté pour faire communiquer entre eux des noeuds voisins du noeud donné, un identifiant d'un noeud protecteur initiateur à associer par les noeuds protecteurs aux paquets en tant qu'étiquette de contexte étant compris dans une demande de protection du chemin primaire,
dans lequel les noeuds protecteurs acheminent des paquets reçus de la façon suivante :
- les paquets reçus par l'intermédiaire d'une branche du chemin de secours et auxquels l'étiquette est associée, sont acheminés, le cas échéant, vers d'autres branches du chemin de secours et vers des branches du chemin primaire issues dudit noeud, à l'exception de la branche reliant le noeud protecteur au noeud donné ;
- les paquets reçus par l'intermédiaire d'une branche du chemin primaire sont acheminés par le chemin de secours après association de l'étiquette et le cas échéant, vers d'autres branches du chemin primaire issues du noeud, à l'exception de la branche reliant le noeud protecteur au noeud donné.

Dans le plan de transfert, l'étiquette à associer à un paquet acheminé sur le chemin de secours est, en complément de l'étiquette liée à l'acheminement, l'identifiant du noeud protecteur initiateur.

L'invention concerne en outre un noeud protecteur initiateur d'une protection d'un chemin à commutations d'étiquettes primaire en mode connecté lors d'une panne affectant un noeud donné dudit chemin dans un réseau de communication par commutation d'étiquettes, par un chemin à commutation d'étiquettes de secours multipoint à multipoint en mode connecté, établi entre des noeuds voisins dudit noeud donné, ledit noeud protecteur appartenant auxdits chemins primaire et de secours et étant situé en amont du noeud donné dans le chemin primaire, ledit noeud protecteur initiateur comprenant :
- des moyens de sélection, agencés pour sélectionner parmi la pluralité des noeuds voisins du noeud donné un ou des noeuds situés en aval du noeud donné dans le chemin primaire, dits noeuds protecteurs, lesdits noeuds protecteurs et le noeud protecteur initiateur étant identifiés de façon unique ;
- des moyens d'envoi, agencés pour envoyer à un noeud protecteur sélectionné une demande de protection, ladite demande de protection indiquant le chemin primaire, le chemin de secours et l'identifiant dudit noeud protecteur à associer par les noeuds protecteurs en tant qu'étiquette de contexte aux paquets destinés à être acheminés par une des branches du chemin primaire reliant le noeud donné à un des noeuds protecteurs et acheminés par le chemin de secours lors d'une panne affectant le noeud donné, et une étiquette de secours ;
- des moyens de commande, agencés pour commander les moyens d'envoi pour l'ensemble des noeuds protecteurs sélectionnés,
- des moyens de configuration d'une table d'acheminement comprenant des sorties nominales visant à encapsuler les paquets acheminés, en régime normal, par une des branches du chemin primaire reliant le noeud donné à un des noeuds protecteurs et, de sorties de secours associant une étiquette d'une branche du chemin primaire à l'étiquette de contexte et l'étiquette de secours et à l'identifiant du prochain noeud sur le chemin de secours, ceci pour chaque branche du chemin de secours,
- des moyens de commutation des sorties, vers les sorties de secours de la table d'acheminement, et de désactivation des sorties nominales en cas de détection de la panne,
- des moyens d'affectation d'une étiquette de secours, agencé pour affecter une étiquette de secours à un chemin primaire, l'étiquette de secours étant destinée à être associée par les noeuds protecteurs aux paquets en complément de l'identifiant du noeud protecteur.

De plus, l'invention concerne :
- un programme pour noeud initiateur d'une protection dans un réseau de communication à commutation d'étiquettes, pour protéger un chemin à commutation d'étiquettes en mode connecté par un chemin à commutation d'étiquettes de secours multipoint à multipoint en mode connecté lors d'une panne affectant un noeud donné du chemin primaire, comprenant des instructions de programme destinées à commander l'exécution des étapes du procédé d'initiation d'une protection précédemment décrit qui sont exécutées par le noeud, lorsque le programme est exécuté par celui-ci ;
- un support d'enregistrement lisible par un noeud d'un réseau de communication à commutation d'étiquettes sur lequel est enregistré le programme pour noeud initiateur d'une protection dans un réseau de communication à commutation d'étiquettes.

L'invention sera mieux comprise à l'aide de la description suivante d'un mode de réalisation particulier des procédés de l'invention, en référence aux dessins annexés sur lesquels :
- la figure 1 représente une partie d'un réseau de communication ;
- la figure 2a représente les étapes du procédé d'initiation d'une protection tel qu'il est mis en oeuvre par un noeud protecteur initiateur d'une protection selon un mode particulier de réalisation de l'invention ;
- la figure 2b représente les étapes du procédé de protection tel qu'il est mis en oeuvre par un noeud protecteur selon un mode particulier de réalisation de l'invention ;
- la figure 3 représente un exemple d'un réseau de communication ;
- la figure 4 représente un dispositif selon un mode particulier de réalisation de l'invention ;
- la figure 5 représente un message de demande d'ouverture de connexion bidirectionnelle selon un mode particulier de réalisation de l'invention ;
- la figure 6 représente un message de demande de protection selon un mode particulier de réalisation de l'invention.

La figure 1 a été commentée lors de la présentation de l'état de la technique. Sur la figure 3, on a représenté une partie d'un réseau de communication sous-jacent sur lequel s'appuie un réseau de communication par commutation d'étiquettes. Une pluralité de noeuds 100 à 111 est représentée. Si on se place au niveau du noeud 104, ce noeud a, dans le réseau de communication sous-jacent, quatre voisins avec lesquels il est en liaison directe, appelés couramment voisins à un saut au sens du protocole de routage. Un chemin à commutation d'étiquettes multipoint à multipoint en mode connecté, appelé par la suite chemin primaire et noté LSP1, est représenté en pointillés. Il permet aux noeuds 100, 103, 109, 110, 107 et 108 de communiquer entre eux. Par exemple, le noeud 100 initie l'établissement du chemin multipoint à multipoint avec réservation de ressources. Il est le noeud racine du chemin primaire. Le chemin primaire peut être établi par exemple à l'aide d'un procédé pour faire communiquer entre eux une pluralité de noeuds d'extrémité à travers un réseau de communication à l'aide d'un chemin à commutation d'étiquettes avec réservation de ressources multipoint à multipoint, noté MP2MP, tel que décrit ci-après.

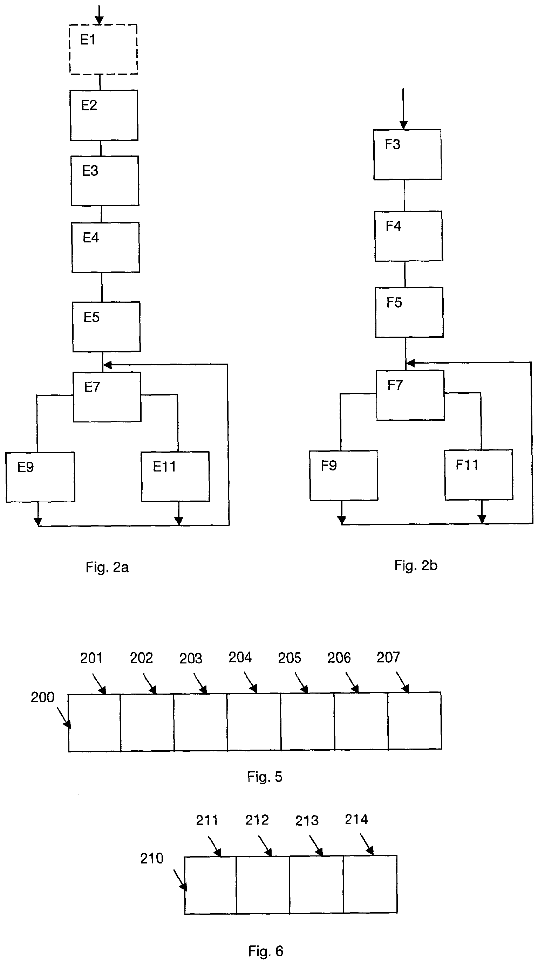

Sur la figure 5, on a représenté un message 200 de demande d'ouverture de connexion bidirectionnelle utilisé pour l'établissement d'un chemin à commutation d'étiquettes multipoint à multipoint en mode connecté. Par exemple, dans le protocole RSVP-TE, il s'agit d'un message "Path".

Un tel message 200 comprend :
- un identifiant du tunnel 201 ;
- un identifiant du chemin à commutation d'étiquettes 202 ;
- l'adresse 203 du noeud racine dans le réseau de communication ;
- une liste 204 d'adresses de noeuds comprenant les adresses respectives d'un ou de plusieurs noeuds d'extrémité ;
- une étiquette 205 allouée localement par le noeud émetteur du message pour le chemin à commutation d'étiquettes dans le sens montant.
- des bandes passantes requises respectives du ou des noeuds de la liste 204 de noeuds ;
- une liste de routes explicites du chemin à commutation d'étiquettes à destination des différents noeuds d'extrémité ;
- une bande passante requise pour le sens descendant, c'est-à-dire du noeud racine vers les noeuds d'extrémité ;
- une bande passante requise pour le sens montant, c'est-à-dire des noeuds d'extrémité vers le noeud racine
- un champ indiquant simultané ou alternatif.

Selon un mode particulier de réalisation de l'invention, la demande d'ouverture de connexion bidirectionnelle comprend, de façon optionnelle, des informations particulières dont l'utilisation est détaillée par la suite :
- une information représentative du fait que le chemin est un chemin de secours ;
- un identifiant 206 d'un noeud protégé par le chemin de secours ;
- une information 207 indiquant qu'un seul noeud ou qu'une pluralité de noeuds peut établir une protection en utilisant le chemin de secours afin de protéger le noeud protégé identifié.

Par convention, on appelle noeud en amont un premier noeud envoyant une demande d'ouverture de connexion bidirectionnelle à un deuxième noeud. De façon symétrique, le deuxième noeud est en aval du premier noeud. Une branche par l'intermédiaire de laquelle la demande a été reçue au deuxième noeud est une branche amont. Une branche par l'intermédiaire de laquelle la demande a été envoyée par le deuxième noeud est une branche aval.

Afin d'établir un chemin multipoint à multipoint en mode connecté, on organise des noeuds d'acheminement suivant un arbre comprenant un noeud racine et des branches reliant les noeuds deux à deux, à partir du noeud racine jusqu'aux noeuds d'extrémité. Le noeud racine reçoit l'ensemble des informations nécessaires à l'établissement de l'arbre, notamment la liste des noeuds d'extrémité, leurs bandes passantes requises respectives, les routes explicites sur lesquelles les branches de l'arbre s'appuient.

A partir des routes explicites, le noeud racine détermine les branches sur lesquelles une réservation de ressources doit être effectuée.

Pour chaque branche aval ainsi déterminée, le noeud racine transmet une demande d'ouverture de connexion bidirectionnelle avec réservation de ressources. Pour une branche donnée, cette demande comprend notamment une bande passante requise pour le sens descendant ainsi qu'une bande passante requise pour le sens montant. Ces valeurs peuvent être déterminées par le noeud racine de façon analogue au traitement qui va être décrit ensuite pour un noeud recevant une demande d'ouverture de connexion bidirectionnelle avec réservation de ressources. Cette demande d'ouverture de connexion bidirectionnelle avec réservation de ressources comprend également une liste d'adresses de noeuds comprenant les adresses respectives d'un ou de plusieurs noeuds d'extrémité à connecter à travers une branche aval issue du noeud racine et une liste de bandes passantes comprenant les bandes passantes requises respectives du ou des noeuds de la liste de noeuds ainsi qu'une liste de routes explicites du chemin à commutation d'étiquettes à destination des différents noeuds d'extrémité.

Un noeud, recevant une demande d'ouverture de connexion bidirectionnelle avec réservation de ressources à travers une branche amont, vérifie s'il est noeud d'acheminement ou noeud d'extrémité.

Si le noeud ayant reçu le message est un noeud d'extrémité, il réserve les ressources pour le sens montant en fonction de la valeur reçue dans le champ relatif à la bande passante requise pour le sens montant et transmet un message de confirmation de connexion, comprenant une bande passante requise pour le flot descendant, égale à celle reçue dans le message de demande d'ouverture de connexion bidirectionnelle.

Si le noeud ayant reçu le message est un noeud d'acheminement, il détermine à partir de la liste de routes explicites du chemin à commutation d'étiquettes à destination des différents noeuds d'extrémité l'ensemble des branches aval à traiter. Dans le cas particulier où le noeud d'acheminement est également un noeud d'extrémité, on considère qu'il s'agit d'une branche aval particulière, qui fait l'objet des étapes décrites ci-après au même titre que les autres branches aval.

Pour une branche aval donnée, il détermine alors une bande passante requise pour le flot montant en fonction de la bande passante requise à travers cette branche aval pour un flot montant provenant d'au moins un noeud d'extrémité. Puis, pour cette même branche aval donnée, il détermine une bande passante requise pour le flot descendant, en fonction de la valeur de la bande passante requise pour le flot descendant à travers la branche amont, reçue dans le message de demande d'ouverture de connexion et de celle requise à travers au moins une autre branche aval issue du noeud d'acheminement pour un flot montant provenant d'au moins un noeud d'extrémité. Une fois, ces deux bandes passantes déterminées, il envoie une nouvelle demande d'ouverture de connexion bidirectionnelle avec réservation de ressources, comprenant la bande passante requise pour le flot descendant déterminée, la bande passante requise pour le flot montant déterminée ainsi qu'une liste d'adresses de noeuds comprenant les adresses respectives du ou des noeuds d'extrémité à connecter à travers la branche aval et une liste de bandes passantes comprenant les bandes passantes requises respectives du ou des noeuds de la liste de noeuds, au noeud de la branche aval donnée, voisin du noeud d'acheminement. Il s'agit du noeud d'acheminement situé à l'autre extrémité de la branche aval donnée.

Il effectue ces traitements, le cas échéant, pour l'ensemble des branches aval issues du noeud d'acheminement.

Le message de demande d'ouverture de connexion bidirectionnelle avec réservation de ressources peut comprendre un champ indiquant "simultané" ou "alternatif".

Si le champ indique "simultané", c'est-à-dire si les noeuds d'extrémité sont susceptibles de communiquer simultanément, une bande passante requise, pour une branche aval issue du noeud d'acheminement, est déterminée en fonction de la somme des bandes passantes requises respectives pour des flots susceptibles d'être acheminés à travers cette branche. On prévoit ainsi la réservation de bande passante pour l'ensemble des flots susceptibles d'être acheminés à travers cette branche.

Si le champ indique "alternatif", c'est-à-dire si les noeuds sont susceptibles de communiquer alternativement, une bande passante requise, pour une branche aval issue du noeud d'acheminement, est déterminée en fonction du maximum parmi les bandes passantes requises respectives pour des flots susceptibles d'être acheminés à travers cette branche.

Lorsque le noeud a reçu un ou des message(s) de confirmation de connexion en provenance du ou des noeud(s) situé(s) à l'autre extrémité de la branche, un message de confirmation de connexion comprenant une bande passante réservée pour le sens montant et une bande passante requise pour le sens descendant, il réserve la bande passante requise sur le sens montant de la branche amont puis il transmet au noeud d'acheminement qui lui avait transmis la demande d'ouverture de connexion bidirectionnelle avec réservation de ressources un message de confirmation de connexion, comprenant la valeur de la bande passante réservée pour le sens montant et la valeur de la bande passante requise pour le sens descendant. Il réserve également effectivement la bande passante requise pour le sens descendant pour la branche aval.

On peut établir ainsi un chemin multipoint à multi point en mode connecté.

On se place par la suite dans le cas où on cherche à protéger le chemin primaire lors d'une panne affectant le noeud 104 ou une des branches permettant de communiquer avec lui dans le chemin primaire.

Le noeud 104 a uniquement une fonction d'acheminement des données dans l'arborescence définie pour le chemin primaire. Trois branches du chemin primaire sont issues du noeud 104 le reliant aux noeuds 101, 106 et 107. Le noeud 104, lorsqu'il reçoit un paquet sur une des branches du chemin primaire, le retransmet sur les autres branches du chemin primaire.

Un deuxième chemin à commutation d'étiquettes multipoint à multipoint en mode connecté est représenté en gras sur la figure 3. Il est établi afin de permettre aux noeuds voisins du noeud 104 de communiquer entre eux par exemple à l'aide du procédé décrit précédemment. Les différents noeuds voisins du noeud 104, c'est-à-dire les noeuds 101, 105, 106, 107 sont des noeuds d'extrémité de ce deuxième chemin, appelé par la suite chemin de secours.

Le procédé d'initiation d'une protection selon un mode particulier de l'invention tel qu'il est mis en oeuvre par un noeud protecteur initiateur va maintenant être décrit en relation avec la figure 2a.

Dans une étape initiale du procédé d'initiation d'une protection, non représentée sur la figure 2a, un noeud initie un établissement du deuxième chemin représenté sur la figure 3, en tant que chemin de secours, par exemple selon le procédé tel que décrit précédemment. Il joue le rôle du noeud racine dans l'établissement de ce chemin de secours et transmet une demande d'ouverture de connexion bidirectionnelle 200 à destination des noeuds voisins du noeud à protéger 104. Cette demande d'ouverture de connexion bidirectionnelle 200 comprend les informations optionnelles définies précédemment, une information représentative du fait que le chemin est un chemin de secours, un identifiant 206 du noeud protégé par le chemin de secours ainsi que l'information de la possibilité de mutualiser le chemin de secours entre plusieurs noeuds protecteurs initiateurs pour protéger des chemins primaires, dans le champ 207.

La demande d'ouverture de connexion bidirectionnelle 200 se propageant dans l'arborescence, les différents noeuds d'extrémité sont informés, par l'information 207 de la possibilité de mutualiser le chemin de secours entre plusieurs noeuds protecteurs initiateurs pour protéger des chemins primaires en cas de panne affectant le noeud indiqué par l'identifiant 206.

On se place ici dans le cas particulier où le noeud 101, appelé par la suite noeud protecteur initiateur, initie une protection du chemin primaire LSP1 pour protéger contre une panne du noeud 104, appelé noeud à protéger. Les noeuds protecteurs sont identifiés de façon unique par un identifiant, noté Id(noeud).

Ayant reçu le message de demande d'ouverture de connexion bidirectionnelle 200, le noeud protecteur initiateur 101 est informé du fait qu'il peut utiliser le chemin de secours pour protéger le noeud 104. Le noeud protecteur 101 est par ailleurs en amont du noeud 104 à protéger dans le chemin primaire.

Dans une étape E1 d'affectation d'une étiquette de secours, le noeud protecteur initiateur 101 affecte au chemin primaire protégé une étiquette de secours UAlabel1. Cette étiquette de secours UAlabel1 est destinée à être associée par les noeuds protecteurs aux paquets qui sont acheminés, en régime normal, par une des branches du chemin primaire reliant le noeud à protéger à un des noeuds protecteurs et lorsque la panne affectant le noeud à protéger est détectée, par le chemin de secours.

Dans une étape de sélection E2, le noeud protecteur initiateur sélectionne parmi la pluralité des noeuds voisins, c'est-à-dire les noeuds du chemin de secours, le ou les noeuds protecteurs situés en aval du noeud à protéger dans le chemin primaire. Le noeud protecteur initiateur 101, ayant transmis la demande d'ouverture de connexion bidirectionnelle du chemin primaire au noeud 104, connaît l'ensemble des noeuds en aval du noeud 104 dans le chemin primaire. Dans l'exemple particulier de la figure 3, le noeud protecteur initiateur 101 sélectionne les noeuds d'extrémité 106 et 107.

Puis, dans une étape d'envoi E3, le noeud protecteur initiateur transmet à chaque noeud protecteur sélectionné lors de l'étape de sélection E2 une demande de protection. Une telle demande de protection 210 est représentée sur la figure 6. La demande de protection indique, entre autres, le chemin primaire protégé MP2MP 211, le chemin de secours MP2MP 212, l'identifiant 213 du noeud protecteur initiateur Id(noeud 101) en tant qu'étiquette de contexte, l'étiquette de secours 214 UAlabel1. Par exemple, dans le protocole RSVP-TE, il s'agit d'un message "Path".

Dans une étape E4, le noeud protecteur initiateur 101 reçoit des confirmations d'établissement de la protection en provenance de l'ensemble des noeuds protecteurs sélectionnés. Par exemple, dans le protocole RSVP-TE, il s'agit de messages "Resv".

A l'issue de l'étape E4, le noeud protecteur initiateur 101 configure dans une étape E5, des tables qui vont lui permettre d'acheminer les paquets lors de l'apparition de la panne.

Dans une première sous-étape de l'étape E5, le noeud protecteur initiateur 101 mémorise dans une table d'acheminement MPLS 301 des sorties nominales visant à encapsuler les paquets acheminés, en régime normal, par une des branches du chemin primaire reliant le noeud à protéger à un des noeuds protecteurs et, lors de la panne affectant le noeud à protéger, par le chemin de secours. Une sortie de secours associe une étiquette d'une branche du chemin primaire à une liste d'étiquettes et à l'identifiant du prochain noeud sur le chemin de secours, ceci pour chaque branche du chemin de secours issue du noeud protecteur initiateur et le reliant à un autre noeud. La liste d'étiquettes comprend l'étiquette utilisée sur cette branche du chemin de secours, l'identifiant du noeud protecteur initiateur Id(noeud 101), l'étiquette de secours UAlabel1. Un paquet transmis sur la sortie de secours est encapsulé et comprend donc, l'étiquette liée à l'acheminement sur le chemin de secours, l'étiquette de contexte Id(noeud 101) puis l'étiquette de secours UAlabel1. De plus, cette table comprend une première instruction permettant de traiter un paquet reçu sur une branche du chemin de secours. Cette première instruction permet de supprimer la première étiquette, correspondant à une étiquette liée à l'acheminement sur le chemin de secours, et de lire la deuxième étiquette, à savoir l'étiquette de contexte Id(noeud 101). Une deuxième instruction associée à l'étiquette de contexte renvoie sur une table de commutation d'étiquettes contextuelle 302 associée au noeud protecteur initiateur 101.

Dans une deuxième sous-étape de l'étape E5, le noeud protecteur initiateur 101 crée ou si elle existe déjà, met à jour la table de commutation d'étiquettes contextuelle 302 associée à son propre identifiant, à savoir le Id(noeud 101). Dans cette table, il associe à l'étiquette de secours UAlabel1, pour chaque branche du chemin primaire LSP1 issu du noeud protecteur initiateur, en dehors de la branche affectée par la panne, une sortie, c'est-à-dire un couple constitué de l'étiquette de sortie associée à cette branche et du prochain noeud.

A titre d'exemple, la table d'acheminement MPLS 301 du noeud 101 contient les instructions suivantes, si l'étiquette d'acheminement sur le chemin de secours est notée 55 :
55 → pop
Id(noeud 101) → pop, go to "table contextuelle associée à l'identifiant".

Quand le noeud protecteur initiateur 101 reçoit un paquet sur le chemin de secours étiqueté "55", à l'aide de la table d'acheminement MPLS 301, il dépile la première étiquette à l'aide de la première instruction, lit l'étiquette contextuelle Id(noeud 101) qui permet de pointer sur la table de commutation d'étiquettes contextuelle 302 associée par la deuxième instruction. Dans cette dernière, il lit en fonction de l'étiquette de secours UAlabel1 l'étiquette à associer en sortie ainsi que le prochain noeud.

L'association de cette étiquette de secours UAlabel1 à l'identifiant du noeud protecteur initiateur Id(Noeud 101) permet d'identifier le chemin primaire protégé LSP1. Ainsi, le noeud protecteur initiateur peut protéger différents chemins primaires et identifier à partir de paquets reçus sur le chemin de secours, à quel chemin primaire ces paquets étaient initialement destinés.

Lors d'une étape E7, le noeud protecteur initiateur 101 détecte un événement. S'il s'agit d'une détection de la panne affectant le noeud à protéger ou le lien entre le noeud protecteur et le noeud à protéger, le procédé d'initiation d'une protection passe à une étape E9 dans laquelle le noeud protecteur initiateur 101 active les sorties de secours de la table d'acheminement MPLS 301 et désactive les sorties nominales. Ainsi, dans le plan de transfert, le noeud protecteur achemine des paquets reçus de la façon suivante :
- les paquets reçus par l'intermédiaire d'une branche du chemin de secours et auxquels l'identifiant du noeud protecteur initiateur Id(noeud 101) et l'étiquette de secours UAlabel1 sont associées, sont acheminés, le cas échéant, vers d'autres branches du chemin de secours et vers des branches du chemin primaire issues dudit noeud, à l'exception de la branche reliant le noeud protecteur au noeud donné ;
- les paquets reçus par l'intermédiaire d'une branche du chemin primaire sont acheminés par le chemin de secours après association de l'identifiant du noeud protecteur initiateur Id(noeud 101) et de l'étiquette de secours UAlabel1 et le cas échéant, vers d'autres branches du chemin primaire issues du noeud, à l'exception de la branche reliant le noeud protecteur initiateur au noeud donné.

Le procédé d'initiation d'une protection retourne ensuite à l'étape E7 d'attente de détection d'un événement.

S'il s'agit d'une détection de la disparition de la panne affectant le noeud à protéger, le procédé d'initiation d'une protection passe à une étape E11 dans laquelle le noeud protecteur initiateur 101 active les sorties nominales de la table d'acheminement MPLS 301 et désactive les sorties de secours. Le procédé d'initiation d'une protection retourne ensuite à l'étape E7 d'attente de détection d'un événement.

Le procédé de protection tel qu'il est mis en oeuvre par un noeud protecteur 106, 107 va maintenant être décrit en relation avec la figure 2b. On se place par la suite au niveau du noeud protecteur 106.

Dans une étape de réception F3, le noeud protecteur 106 reçoit une demande de protection en provenance d'un noeud protecteur initiateur 101. La demande de protection 210 indique, entre autres, le chemin primaire protégé MP2MP 211, le chemin de secours MP2MP 212, l'identifiant 213 du noeud protecteur initiateur Id(noeud 101), l'étiquette de secours 214 UAlabel1. Par exemple, dans le protocole RSVP-TE, il s'agit d'un message "Path".

Dans une étape F4, le noeud protecteur 106 envoie une confirmation d'établissement de la protection au noeud protecteur initiateur 101. Par exemple, dans le protocole RSVP-TE, il s'agit de messages "Resv".

A l'issue de l'étape F4, le noeud protecteur 106 configure dans une étape F5, les tables qui vont lui permettre d'acheminer les paquets lors de l'apparition de la panne.

Dans une première sous-étape de l'étape F5, le noeud protecteur 106 mémorise dans sa table d'acheminement MPLS 301 des sorties de secours visant à encapsuler les paquets acheminés, en régime normal, par une des branches du chemin primaire reliant le noeud à protéger à un des noeuds protecteurs et, lors de la panne affectant le noeud à protéger, par le chemin de secours. Une sortie de secours associe une étiquette d'une branche du chemin primaire à une liste d'étiquettes et à l'identifiant du prochain noeud sur le chemin de secours, ceci pour chaque branche du chemin de secours issue du noeud protecteur 106 et le reliant à un autre noeud. La liste d'étiquettes comprend l'étiquette utilisée sur la branche du chemin de secours, l'identifiant Id(noeud 101) du noeud protecteur initiateur 101 et l'étiquette de secours UAlabel1. Un paquet transmis sur la sortie de secours est encapsulé afin d'être acheminé sur le chemin de secours et comprend donc l'étiquette liée à l'acheminement sur le chemin de secours, l'étiquette de contexte Id(noeud 101) suivie de l'étiquette de secours UAlabel1. De plus, cette table comprend une première instruction permettant de traiter un paquet reçu sur une branche du chemin de secours. Cette première instruction permet de supprimer la première étiquette, correspondant à une étiquette liée à l'acheminement sur le chemin de secours, et de lire la deuxième étiquette, à savoir l'étiquette de contexte Id(noeud 101). Une deuxième instruction associée à l'étiquette de contexte renvoie sur une table de commutation d'étiquettes contextuelle 302 associée au noeud protecteur initiateur 101.

Dans une deuxième sous-étape de l'étape F5, le noeud protecteur 106 crée ou si elle existe, met à jour une table de commutation d'étiquettes contextuelle associée à l'identifiant du noeud protecteur initiateur Id(noeud 101). Dans cette table, il associe à l'étiquette de secours UAlabel1, pour chaque branche du chemin primaire LSP1 issu du noeud protecteur 106, en dehors de la branche affectée par la panne, une sortie, c'est-à-dire un couple constitué de l'étiquette de sortie associée à cette branche et du prochain noeud.

Le traitement effectué par un noeud protecteur lorsqu'il reçoit un paquet sur le chemin de secours est identique à celui qui a été décrit au noeud protecteur initiateur 101.

Lors d'une étape F7, le noeud protecteur 106 détecte un événement. S'il s'agit d'une détection de la panne affectant le noeud à protéger ou le lien reliant le noeud protecteur au noeud à protéger, le procédé de protection passe à une étape F9 dans laquelle le noeud protecteur 106 active les sorties de secours de la table d'acheminement MPLS et désactive les sorties nominales. Dans le plan de transfert, l'acheminement des paquets se passe de façon identique à celui décrit au noeud protecteur initiateur 101 Le procédé de protection retourne ensuite à l'étape F7 d'attente de détection d'un événement.

S'il s'agit d'une détection de la disparition de la panne affectant le noeud à protéger, le procédé de protection passe à une étape F11 dans laquelle le noeud protecteur 106 active les sorties nominales de la table d'acheminement MPLS et désactive les sorties de secours. Le procédé de protection retourne ensuite à l'étape F7 d'attente de détection d'un événement.

Dans l'exemple de la figure 3, à l'issue de l'établissement de la protection par le noeud protecteur initiateur 101 visant à protéger le noeud 104, les noeuds protecteurs 101, 106 et 107 ont créé ou mis à jour chacun une table de commutation d'étiquettes contextuelle associée au noeud protecteur initiateur 101.

Un noeud du chemin de secours 102, 105 qui n'appartient pas à l'ensemble des noeuds protecteurs sélectionnés n'a pas reçu la demande de protection envoyée par le noeud protecteur initiateur 101 et n'a pas préconfiguré des sorties de secours à activer lors de l'apparition de la panne. Le noeud 102 a uniquement une fonction d'acheminement sur le chemin de secours. Le noeud 105, quant à lui, est un des noeuds d'extrémité du chemin de secours. Quand le noeud 105 reçoit un paquet sur le chemin de secours, il le réachemine sur le chemin de secours. De plus, il analyse l'étiquette de contexte. N'ayant pas reçu la demande de protection envoyée par le noeud protecteur initiateur, il n'a pas d'entrée dans ses tables correspondant à l'étiquette de contexte et à l'étiquette de secours. Il ne continue donc pas le traitement de ce paquet.

Un autre noeud qui souhaite utiliser également le chemin de secours pour protéger un autre chemin primaire LSP2 peut mettre alors en oeuvre les différentes étapes du procédé d'initiation d'une protection de façon similaire. L'association d'une étiquette identifiant le noeud protecteur initiateur et d'une étiquette de secours permet d'identifier de façon unique le chemin primaire emprunté par les paquets. L'identifiant du noeud protecteur initiateur est essentielle en tant qu'étiquette de contexte. En effet, il n'est pas possible de coordonner l'affectation des étiquettes de secours, cette affectation étant effectuée localement par les différents noeuds. Une même étiquette de secours peut alors être allouée par deux noeuds protecteurs différents et sans l'identifiant du noeud protecteur initiateur, il n'est alors pas possible d'acheminer correctement les paquets. Une mutualisation du chemin de secours par plusieurs noeuds protecteurs initiateurs n'est alors pas possible.

A titre d'exemple, si un autre chemin primaire TE P2P LSP2 reliant le noeud 105 au noeud 101 en passant par le noeud 104 doit être protégé, le noeud 105 peut jouer le rôle du noeud protecteur initiateur et initier une demande de protection en utilisant le chemin de secours établi. A l'issue de la mise en oeuvre des étapes des procédés, les noeuds 101 et 105 ont créé ou mis à jour chacun une table de commutation d'étiquettes contextuelle associée au noeud 105. Ainsi, lors de la panne affectant le noeud 104, les paquets du chemin primaire LSP1 et ceux du chemin primaire LSP2 sont acheminés par le chemin de secours. Le noeud 101 recevant ces paquets réachemine les paquets sur leur chemin primaire d'origine respectif. Le noeud 105 réachemine les paquets du LSP2 sur leur chemin primaire LSP2. Les noeuds 106 et 107 réacheminent les paquets du LSP1 sur leur chemin primaire LSP1 et détruisent les paquets du LSP2.

On note donc que bien que la description ait été faite dans le cadre de la protection d'un chemin primaire TE MP2MP, on peut protéger différents types de chemin TE LSP, P2P, P2MP, MP2MP, à l'aide des procédés en mutualisant un chemin de secours TE MP2MP.

Dans une variante à ce mode de réalisation, l'étape E1 n'est pas effectuée. Dans cette variante, le noeud protecteur en amont peut initier la protection d'un seul chemin primaire. La demande de protection 210 indique alors le chemin primaire protégé MP2MP 211, le chemin de secours MP2MP 212, l'identifiant 213 du noeud protecteur initiateur Id(noeud 101). On garde toutefois l'avantage de pouvoir initier la protection d'un chemin primaire à partir de n'importe lequel des noeuds d'extrémité du chemin de secours.

Dans le mode particulier de réalisation qui a été décrit, le chemin de secours MP2MP en mode connecté permet de faire communiquer les noeuds voisins immédiats, c'est-à-dire des noeuds à un saut du noeud à protéger dans le réseau de communication. Ceci permet à ces noeuds de détecter directement une panne intervenant sur le lien qui les relie au noeud à protéger. Dans un autre mode particulier de réalisation, on peut envisager d'étendre le chemin de secours à des noeuds qui ne sont pas voisins immédiats du noeud à protéger, par exemple des noeuds à deux sauts. Toutefois, cet autre mode particulier de réalisation nécessite de mettre en place un mécanisme permettant à ces noeuds d'être informés de la panne affectant le noeud à protéger, par exemple par échange de signalisation.

On notera que les agencements des tables d'acheminement MPLS 301 et des tables de commutation d'étiquettes contextuelles 302 sont donnés à titre d'exemple non limitatif et que les procédés selon l'invention peuvent être adaptés à l'aide de tables configurées différemment mais permettant d'acheminer les paquets de la manière décrite.

L'invention concerne donc également un procédé d'acheminement de paquets lors d'une panne affectant un noeud donné 104 d'un chemin à commutation d'étiquettes primaire en mode connecté dans un réseau de communication par commutation d'étiquettes, dans lequel ledit chemin primaire est protégé par un chemin à commutation d'étiquettes de secours multipoint à multipoint en mode connecté, le chemin de secours étant adapté pour faire communiquer entre eux des noeuds voisins 101, 102, 105, 107, 108 du noeud donné, un identifiant d'un noeud protecteur initiateur à associer aux paquets en tant qu'étiquette de contexte étant compris dans une demande de protection du chemin primaire,
dans lequel, les noeuds protecteurs acheminent des paquets reçus de la façon suivante :
- les paquets reçus par l'intermédiaire d'une branche du chemin de secours et auxquels l'étiquette est associée, sont acheminés, le cas échéant, vers d'autres branches du chemin de secours et vers des branches du chemin primaire issues dudit noeud, à l'exception de la branche reliant le noeud protecteur au noeud donné ;
- les paquets reçus par l'intermédiaire d'une branche du chemin primaire sont acheminés par le chemin de secours après association de l'étiquette et le cas échéant, vers d'autres branches du chemin primaire issues du noeud, à l'exception de la branche reliant le noeud protecteur au noeud donné.

Un noeud protecteur 300 selon un mode particulier de réalisation de l'invention va maintenant être décrit en relation avec la figure 4.

Le noeud protecteur 300 est agencé pour protéger un chemin à commutations d'étiquettes primaire en mode connecté lors d'une panne affectant un noeud donné dudit chemin dans un réseau de communication par commutation d'étiquettes, par un chemin à commutation d'étiquettes de secours multipoint à multipoint en mode connecté, adapté pour faire communiquer entre eux des noeuds voisins dudit noeud donné. Le noeud 300 appartient aux chemins primaire et de secours. Il comprend :
- une table d'acheminement MPLS 301,
- une zone mémoire 302, agencée pour mémoriser des tables de commutation d'étiquettes contextuelles ;
- un module 304 de protection, agencé pour envoyer à un autre noeud protecteur ou pour recevoir d'un autre noeud protecteur une demande de protection, la demande de protection 210 indiquant un chemin primaire, un chemin de secours et au moins une étiquette, comprenant un identifiant propre au noeud protecteur émetteur de la demande de protection à associer par les noeuds protecteurs aux paquets destinés à être acheminés par une des branches du chemin primaire reliant le noeud à protéger à un des noeuds protecteurs et acheminés par le chemin de secours lors d'une panne affectant le noeud donné ;
- un module 306 de configuration de la table d'acheminement MPLS 301 et des tables de commutation d'étiquettes contextuelles en fonction d'informations transmises ou reçues dans une demande de protection ;
- un module 307 de commutation des sorties, vers les sorties de secours de la table d'acheminement MPLS 301 en cas de détection de la panne, vers les sorties nominales de la table d'acheminement MPLS 301 lors du retour en régime normal.

Le noeud protecteur 300, jouant le rôle de noeud protecteur initiateur, peut également comprendre :
- un module 303 de sélection, agencé pour sélectionner parmi la pluralité des noeuds voisins du noeud donné le ou les noeuds protecteurs appartenant au chemin primaire ;
- un module 305 de commande, agencés pour commander le module 304 de protection pour l'ensemble des noeuds protecteurs sélectionnés ;
- un module 308 de réception d'une demande d'établissement du chemin de secours, la demande indiquant qu'une pluralité de noeuds peut utiliser ledit chemin de secours pour protéger le chemin primaire lors de pannes affectant ledit noeud donné ;.
- un module 309 d'affectation d'une étiquette de secours, agencé pour affecter une étiquette de secours à un chemin primaire, l'étiquette de secours étant destinée à être associée par les noeuds protecteurs aux paquets en complément de l'identifiant du noeud protecteur.

Les noeuds protecteurs tels que décrits précédemment comprennent en outre un module 310 d'acheminement des paquets dans le plan de transfert en fonction des sorties sélectionnées par le module 307.

L'invention concerne également un système de communication agencé pour protéger un chemin à commutations d'étiquettes primaire en mode connecté lors d'une panne affectant un noeud donné de ce chemin dans un réseau de communication par commutation d'étiquettes, par un chemin à commutation d'étiquettes de secours multipoint à multipoint en mode connecté, adapté pour faire communiquer entre eux des noeuds voisins du noeud donné. Le système comprend ;
- au moins un noeud protecteur 300, jouant le rôle de noeud protecteur initiateur, tel que décrit précédemment ;
- au moins un noeud protecteur 300 tel que décrit précédemment.

Les modules 303, 304, 305, 306, 307, 308, 309 et 310 sont agencés pour mettre en oeuvre les procédés précédemment décrits. Il s'agit de préférence de modules logiciels comprenant des instructions logicielles pour faire exécuter les étapes des procédés précédemment décrits, mises en oeuvre par un noeud du réseau de communication à commutation d'étiquettes. L'invention concerne donc aussi :
- un programme pour noeud initiateur d'une protection dans un réseau de communication à commutation d'étiquettes, pour protéger un chemin à commutation d'étiquettes en mode connecté par un chemin à commutation d'étiquettes de secours multipoint à multipoint en mode connecté lors d'une panne affectant un noeud donné du chemin primaire, comprenant des instructions de programme destinées à commander l'exécution des étapes du procédé d'initiation d'une protection précédemment décrit qui sont exécutées par le noeud, lorsque le programme est exécuté par celui-ci ;
- un support d'enregistrement lisible par un noeud d'un réseau de communication à commutation d'étiquettes sur lequel est enregistré le programme pour noeud initiateur d'une protection dans un réseau de communication à commutation d'étiquettes.

L'invention concerne également :
- un programme pour noeud protecteur d'un réseau de communication à commutation d'étiquettes, pour protéger un chemin à commutation d'étiquettes en mode connecté par un chemin à commutation d'étiquettes de secours multipoint à multipoint en mode connecté lors d'une panne affectant un noeud donné dudit chemin primaire, comprenant des instructions de programme destinées à commander l'exécution des étapes du procédé de protection tel que décrit précédemment qui sont exécutées par ledit noeud, lorsque ledit programme est exécuté par celui-ci ;
- un support d'enregistrement lisible par un noeud d'un réseau de communication à commutation d'étiquettes sur lequel est enregistré le programme pour noeud protecteur dans un réseau de communication à commutation d'étiquettes.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'initiation d'une protection d'un chemin à commutation d'étiquettes primaire en mode connecté lors d'une panne affectant un noeud donné (104) dudit chemin dans un réseau de communication par commutation d'étiquettes, par un chemin à commutation d'étiquettes de secours multipoint à multipoint en mode connecté, établi entre des noeuds voisins (101, 102, 105, 107, 108) dudit noeud donné, le chemin primaire ayant été établi de noeuds en amont du noeud donné vers un ou des noeuds aval,
le procédé étant mis en oeuvre par un noeud (101) voisin appartenant auxdits chemins primaire et de secours et situé en amont du noeud donné dans le chemin primaire, dit noeud protecteur initiateur et comprenant les étapes suivantes :- une étape (E2) de sélection parmi la pluralité des noeuds voisins du noeud donné d'un ou de noeuds situés en aval du noeud donné dans le chemin primaire, dits noeuds protecteurs, lesdits noeuds protecteurs et le noeud protecteur initiateur étant identifiés de façon unique ;
- une étape (E1) d'affectation d'une étiquette de secours, associée au chemin primaire, à associer par les noeuds protecteurs à des paquets destinés à être acheminés par une des branches du chemin primaire reliant le noeud donné à un des noeuds protecteurs et acheminés par le chemin de secours lors de la panne,
- une étape (E3) d'envoi à un des noeuds protecteurs sélectionnés d'une demande de protection, ladite demande de protection (210) indiquant le chemin primaire, le chemin de secours, l'identifiant dudit noeud protecteur initiateur à associer par les noeuds protecteurs en tant qu'étiquette de contexte auxdits paquets, et l'étiquette de secours, ladite étape d'envoi étant réitérée pour l'ensemble des noeuds protecteurs sélectionnés,
- une étape (E5) de mémorisation, dans une table d'acheminement, de sorties nominales visant à encapsuler les paquets acheminés, en régime normal, par une des branches du chemin primaire reliant le noeud donné (104) à un des noeuds protecteurs et, de sorties de secours associant une étiquette d'une branche du chemin primaire à l'étiquette de contexte et l'étiquette de secours et à l'identifiant du prochain noeud sur le chemin de secours, ceci pour chaque branche du chemin de secours,
- une étape (E7) de détection d'un événement,
- si l'événement est une panne affectant le noeud donné (104), une étape (E9) d'activation des sorties de secours mémorisées, et de désactivation des sorties nominales mémorisées,
- si l'événement est une disparition d'une panne affectant le noeud donné (104), une étape (E11) de désactivation des sorties de secours mémorisées et d'activation des sorties nominales mémorisées.

2. Procédé selon la revendication 1, comprenant en outre une étape de réception d'une demande d'établissement du chemin de secours, ladite demande indiquant qu'une pluralité de noeuds peut utiliser ledit chemin de secours pour protéger un chemin primaire lors de pannes affectant ledit noeud donné.

3. Noeud protecteur (300) initiateur d'une protection d'un chemin à commutations d'étiquettes primaire en mode connecté lors d'une panne affectant un noeud donné dudit chemin dans un réseau de communication par commutation d'étiquettes, par un chemin à commutation d'étiquettes de secours multipoint à multipoint en mode connecté, établi entre des noeuds voisins dudit noeud donné, ledit noeud protecteur appartenant auxdits chemins primaire et de secours et étant situé en amont du noeud donné dans le chemin primaire, ledit noeud protecteur initiateur comprenant :
- des moyens (303) de sélection, agencés pour sélectionner parmi la pluralité des noeuds voisins du noeud donné un ou des noeuds situés en aval du noeud donné dans le chemin primaire, dits noeuds protecteurs, lesdits noeuds protecteurs et le noeud protecteur initiateur étant identifiés de façon unique ;
- des moyens (304) d'envoi, agencés pour envoyer à un noeud protecteur sélectionné une demande de protection, ladite demande de protection (210) indiquant le chemin primaire, le chemin de secours et l'identifiant dudit noeud protecteur à associer par les noeuds protecteurs en tant qu'étiquette de contexte aux paquets destinés à être acheminés par une des branches du chemin primaire reliant le noeud donné à un des noeuds protecteurs et acheminés par le chemin de secours lors d'une panne affectant le noeud donné, et une étiquette de secours ;
- des moyens (305) de commande, agencés pour commander les moyens d'envoi pour l'ensemble des noeuds protecteurs sélectionnés,
- des moyens (306) de configuration d'une table d'acheminement comprenant des sorties nominales visant à encapsuler les paquets acheminés, en régime normal, par une des branches du chemin primaire reliant le noeud donné (104) à un des noeuds protecteurs et, de sorties de secours associant une étiquette d'une branche du chemin primaire à l'étiquette de contexte et l'étiquette de secours et à l'identifiant du prochain noeud sur le chemin de secours, ceci pour chaque branche du chemin de secours,
- des moyens (307) de commutation des sorties, vers les sorties de secours de la table d'acheminement, et de désactivation des sorties nominales en cas de détection de la panne,
- des moyens (309) d'affectation d'une étiquette de secours, agencé pour affecter une étiquette de secours à un chemin primaire, l'étiquette de secours étant destinée à être associée par les noeuds protecteurs aux paquets en complément de l'identifiant du noeud protecteur.

4. Programme pour noeud initiateur d'une protection dans un réseau de communication à commutation d'étiquettes, pour protéger un chemin à commutation d'étiquettes en mode connecté par un chemin à commutation d'étiquettes de secours multipoint à multipoint en mode connecté lors d'une panne affectant un noeud donné dudit chemin primaire, comprenant des instructions de programme destinées à commander l'exécution des étapes du procédé selon la revendication 1 qui sont exécutées par ledit noeud, lorsque ledit programme est exécuté par celui-ci.

5. Support d'enregistrement lisible par un noeud d'un réseau de communication à commutation d'étiquettes sur lequel est enregistré le programme selon la revendication 4.

## Patentansprüche

1. Verfahren zur Initiierung eines Schutzes eines Label-Switch-Primärpfads im Verbindungsmodus bei einem Störfall, der sich auf einen gegebenen Knoten (104) des Pfads in einem Label-Switch-Kommunikationsnetz auswirkt, durch einen Mehrpunkt-zu-Mehrpunkt-Label-Switch-Ersatzpfad im Verbindungsmodus, der zwischen benachbarten Knoten (101, 102, 105, 107, 108) des gegebenen Knotens aufgebaut wird, wobei der Primärpfad von Knoten stromaufwärts vor dem gegebenen Knoten zu einem oder mehreren stromabwärtigen Knoten aufgebaut wird,
wobei das Verfahren von einem benachbarten Knoten (101) durchgeführt wird, der zu den Primär- und Ersatzpfaden gehört und sich stromaufwärts vor dem gegebenen Knoten im Primärpfad befindet, Initiatorschutzknoten genannt, und die folgenden Schritte enthält:
- einen Schritt (E2) der Auswahl aus der Vielzahl der benachbarten Knoten des gegebenen Knotens eines oder mehrerer Knoten, die sich stromabwärts hinter dem gegebenen Knoten im Primärpfad befinden, Schutzknoten genannt, wobei die Schutzknoten und der Initiatorschutzknoten eindeutig identifiziert werden;
- einen Schritt (E1) der Zuweisung eines dem Primärpfad zugeordneten Ersatzlabels, das von den Schutzknoten Paketen zuzuordnen ist, die dazu bestimmt sind, von einem der Zweige des Primärpfads weitergeleitet zu werden, der den gegebenen Knoten mit einem der Schutzknoten verbindet, und die im Störfall vom Ersatzpfad weitergeleitet werden,
- einen Schritt (E3) des Sendens an einen der ausgewählten Schutzknoten einer Schutzanforderung, wobei die Schutzanforderung (210) den Primärpfad, den Ersatzpfad, die Kennung des Initiatorschutzknotens, die von den Schutzknoten als Kontextlabel den Paketen zuzuordnen ist, und das Ersatzlabel anzeigt, wobei der Sendeschritt für die Gesamtheit der ausgewählten Schutzknoten wiederholt wird,
- einen Schritt (E5) des Speicherns, in einer Weiterleitungstabelle, von Nennausgängen, die darauf abzielen, die weitergeleiteten Pakete im Normalbetrieb durch einen der Zweige des Primärpfads einzukapseln, der den gegebenen Knoten (104) mit einem der Schutzknoten verbindet, und von Ersatzausgängen, die ein Label eines Zweigs des Primärpfads dem Kontextlabel und dem Ersatzlabel und der Kennung des nächsten Knotens auf dem Ersatzpfad zuordnen, dies für jeden Zweig des Ersatzpfads,
- einen Schritt (E7) der Erfassung eines Ereignisses,
- wenn das Ereignis ein Störfall ist, der sich auf den gegebenen Knoten (104) auswirkt, einen Schritt (E9) der Aktivierung der gespeicherten Ersatzausgänge und der Deaktivierung der gespeicherten Nennausgänge,
- wenn das Ereignis ein Verschwinden eines sich auf den gegebenen Knoten (104) auswirkenden Störfalls ist, einen Schritt (E11) der Deaktivierung der gespeicherten Ersatzausgänge und der Aktivierung der gespeicherten Nennausgänge.

2. Verfahren nach Anspruch 1, das außerdem einen Schritt des Empfangs einer Aufbauanforderung des Ersatzpfads enthält, wobei die Anforderung anzeigt, dass eine Vielzahl von Knoten den Ersatzpfad benutzen kann, um einen Primärpfad bei Störfällen zu schützen, die sich auf den gegebenen Knoten auswirken.

3. Initiatorschutzknoten (300) eines Schutzes eines Label-Switch-Primärpfads im Verbindungsmodus bei einem Störfall, der sich auf einen gegebenen Knoten des Pfads in einem Label-Switch-Kommunikationsnetz auswirkt, durch einen Mehrpunkt-zu-Mehrpunkt-Label-Switch-Ersatzpfad im Verbindungsmodus, der zwischen benachbarten Knoten des gegebenen Knotens aufgebaut wird, wobei der Schutzknoten zu den Primär- und Ersatzpfaden gehört und sich stromaufwärts vor dem gegebenen Knoten im Primärpfad befindet, wobei der Initiatorschutzknoten enthält:
- Auswahleinrichtungen (303), die eingerichtet sind, um unter der Vielzahl der benachbarten Knoten des gegebenen Knotens einen oder mehrere Knoten auszuwählen, die sich stromabwärts hinter dem gegebenen Knoten im Primärpfad befinden, Schutzknoten genannt, wobei die Schutzknoten und der Initiatorschutzknoten eindeutig identifiziert werden;
- Sendeeinrichtungen (304), die eingerichtet sind, um an einen ausgewählten Schutzknoten eine Schutzanforderung zu senden, wobei die Schutzanforderung (210) den Primärpfad, den Ersatzpfad und die Kennung des Schutzknotens, die von den Schutzknoten als Kontextlabel den Paketen zuzuordnen ist, die dazu bestimmt sind, von einem der Zweige des Primärpfads weitergeleitet zu werden, der den gegebenen Knoten mit einem der Schutzknoten verbindet, und vom Ersatzpfad bei einem Störfall weitergeleitet werden, der sich auf den gegebenen Knoten auswirkt, und ein Ersatzlabel anzeigt;
- Steuereinrichtungen (305), die eingerichtet sind, um die Sendeeinrichtungen für die Gesamtheit der ausgewählten Schutzknoten zu steuern,
- Einrichtungen (306) zur Konfiguration einer Weiterleitungstabelle, die Nennausgänge, die darauf abzielen, die weitergeleiteten Pakete im Normalbetrieb durch einen der Zweige des Primärpfads einzukapseln, der den gegebenen Knoten (104) mit einem der Schutzknoten verbindet, und Ersatzausgänge enthält, die ein Label eines Zweigs des Primärpfads dem Kontextlabel und dem Ersatzlabel und der Kennung des nächsten Knotens auf dem Ersatzpfad zuordnen, dies für jeden Zweig des Ersatzpfads,
- Einrichtungen (307) zum Schalten der Ausgänge zu den Ersatzausgängen der Weiterleitungstabelle und zur Deaktivierung der Nennausgänge im Fall einer Erfassung des Störfalls,
- Einrichtungen (309) zur Zuweisung eines Ersatzlabels, die eingerichtet sind, um ein Ersatzlabel einem Primärpfad zuzuweisen, wobei das Ersatzlabel dazu bestimmt ist, von den Schutzknoten den Paketen zusätzlich zur Kennung des Schutzknotens zugeordnet zu werden.

4. Programm für einen Initiatorknoten eines Schutzes in einem Label-Switch-Kommunikationsnetz, um einen Label-Switch-Pfad im Verbindungsmodus durch einen Mehrpunkt-zu-Mehrpunkt-Label-Switch-Ersatzpfad im Verbindungsmodus bei einem Störfall zu schützen, der sich auf einen gegebenen Knoten des Primärpfads auswirkt, das Programmanweisungen enthält, die dazu bestimmt sind, die Ausführung der Schritte des Verfahrens nach Anspruch 1 zu steuern, die vom Knoten ausgeführt werden, wenn das Programm von diesem ausgeführt wird.

5. Aufzeichnungsträger, der von einem Knoten eines Label-Switch-Kommunikationsnetzes lesbar ist, auf dem das Programm nach Anspruch 4 aufgezeichnet ist.

## Claims

1. Method for initiating a protection of a primary label-switching path in connected mode upon a fault affecting a given node (104) of said path in a label-switching communication network, by a multipoint to multipoint backup label-switching path in connected mode, established between neighbour nodes (101, 102, 105, 107, 108) of said given node, the primary path having been established from nodes upstream of the given node to one or more downstream nodes,
the method being implemented by a neighbour node (101) belonging to said primary and backup paths and which is situated upstream of the given node in the primary path, termed the initiator protector node, and comprising the following steps:
- a step (E2) of selecting from among the plurality of the neighbour nodes of the given node one or more nodes, termed protector nodes, situated downstream of the given node in the primary path, said protector nodes and the initiator protector node being identified in a unique manner;
- a step (E1) of assigning a backup label, associated with the primary path, to be associated by the protector nodes with packets intended to be forwarded by one of the branches of the primary path linking the given node to one of the protector nodes and forwarded by the backup path upon the fault,
- a step (E3) of dispatching to one of the selected protector nodes a protection request, said protection request (210) indicating the primary path, the backup path, the identifier of said initiator protector node to be associated by the protector nodes in the guise of context label with said packets, and the backup label, said dispatching step being repeated for the whole set of selected protector nodes,
- a step (E5) of storing, in a forwarding table, nominal outputs aimed at encapsulating the packets forwarded, in the normal regime, by one of the branches of the primary path linking the given node (104) to one of the protector nodes and, backup outputs associating a label of a branch of the primary path with the context label and the backup label and with the identifier of the next node on the backup path, doing so for each branch of the backup path,
- a step (E7) of detecting an event,
- if the event is a fault affecting the given node (104), a step (E9) of activating the stored backup outputs, and of deactivating the stored nominal outputs,
- if the event is a disappearance of a fault affecting the given node (104), a step (E11) of deactivating the stored backup outputs, and of activating the stored nominal outputs.

2. Method according to Claim 1, furthermore comprising a step of receiving a request for establishment of the backup path, said request indicating that a plurality of nodes can use said backup path to protect a primary path upon faults affecting said given node.

3. Initiator protector node (300) initiating a protection of a primary label-switching path in connected mode upon a fault affecting a given node of said path in a label-switching communication network, by a multipoint to multipoint backup label-switching path in connected mode, established between neighbour nodes of said given node, said protector node belonging to said primary and backup paths and being situated upstream of the given node in the primary path, said initiator protector node comprising:
- selection means (303), designed to select from among the plurality of the neighbour nodes of the given node one or more nodes, termed protector nodes, situated downstream of the given node in the primary path, said protector nodes and the initiator protector node being identified in a unique manner;
- dispatching means (304), designed to dispatch to a selected protector node a protection request, said protection request (210) indicating the primary path, the backup path and the identifier of said protector node to be associated by the protector nodes in the guise of context label with the packets intended to be forwarded by one of the branches of the primary path linking the given node to one of the protector nodes and forwarded by the backup path upon a fault affecting the given node, and a backup label;
- control means (305), designed to control the dispatching means for the set of selected protector nodes
- means (306) for configuring a forwarding table comprising nominal outputs aimed at encapsulating the packets forwarded, in the normal regime, by one of the branches of the primary path linking the given node (104) to one of the protector nodes and, backup outputs associating a label of a branch of the primary path with the context label and the backup label and with the identifier of the next node on the backup path, doing so for each branch of the backup path,
- means (307) for switching the outputs, to the backup outputs of the forwarding table, and for deactivating the nominal outputs in case of detection of the fault,
- means (309) for assigning a backup label, designed to assign a backup label to a primary path, the backup label being intended to be associated by the protector nodes with the packets as a supplement to the identifier of the protector node.

4. Program for initiator node initiating a protection in a label-switching communication network, for protecting a label-switching path in connected mode by a multipoint to multipoint backup label-switching path in connected mode upon a fault affecting a given node of said primary path, comprising program instructions intended to control the execution of the steps of the method according to Claim 1 which are executed by said node, when said program is executed by the latter.

5. Recording medium readable by a node of a label-switching communication network on which the program according to Claim 4 is recorded.
